# EUROPÄISCHE PATENTSCHRIFT

(11) **EP 2 609 308 B1**
(45) Veröffentlichungstag und Bekanntmachung des Hinweises auf die Patenterteilung: **21.01.2015**
(21) Anmeldenummer: 11734143.8
(22) Anmeldetag: 22.07.2011
(51) Int. Cl.: F02B 39/00, F02B 37/18, F16K 31/00, F16K 31/524

(54) **VERSTELLEINRICHTUNG SOWIE ABGASTURBOLADER**
ADJUSTMENT DEVICE AND AN EXHAUST GAS TURBOCHARGER
DISPOSITIF DE REGLAGE ET TURBOCOMPRESSEUR

(30) Priorität: 26.08.2010 DE 102010039791
(43) Veröffentlichungstag der Anmeldung: 03.07.2013
(73) Patentinhaber: Robert Bosch GmbH, 70442 Stuttgart (DE)
(72) Erfinder: WOERZ, Stefan, 71665 Vaihingen/Enz (DE); OUDART, Joel, Sunnyvale California 94087 (US)
(86) Internationale Anmeldenummer: PCT/EP2011/062602
(87) Internationale Veröffentlichungsnummer: WO 2012/025318

(56) Entgegenhaltungen:
- WO-A1-2007/111565
- DE-A1-102005 028 372
- DE-A1-102007 021 884
- US-A- 5 456 128

## Beschreibung

### Stand der Technik

Die Erfindung betrifft eine Verstelleinrichtung, insbesondere eines Querschnittsverstellglieds, zur Bereitstellung eines Gesamtdrehmoments an einer an einen Antrieb gekoppelten Antriebswelle der Verstelleinrichtung. Die Erfindung betrifft weiterhin einen Abgasturbolader.

Verstelleinrichtungen der eingangs genannten Art sind aus dem Stand der Technik bekannt, vergleiche US 5456128 A aus dem technischen Gebiet der Druckmaschinen. Sie werden beispielsweise im Kraftfahrzeugbereich eingesetzt und sind dabei insbesondere dem zumindest einen Querschnittsverstellglied zugeordnet. Das Querschnittsverstellglied ist zum Beispiel ein Wastegate eines Abgasturboladers. Abgasturbolader mit einem solchen Wastegate, welches mittels der Verstelleinrichtung beziehungsweise eines Stellantriebs verstellbar ist, sind ebenfalls aus dem Stand der Technik bekannt. Die Verstelleinrichtung kann beispielsweise als pneumatische Verstelleinrichtung ausgeführt sein. Alternativ kann die Ansteuerung beziehungsweise Verstellung des Querschnittsverstellglieds beziehungsweise des Wastegates jedoch auch mittels einer elektrischen Verstelleinrichtung erfolgen. Gegenüber den pneumatischen Verstelleinrichtungen sind mit diesen erheblich größere Stellkräfte beziehungsweise Stelldrehmomente bereitstellbar. Dabei werden üblicherweise dauerhaft Werte bis etwa 250 Nm erreicht, welche zum optimierten Dichthalten des Querschnittsverstellglieds in dessen Geschlossenstellung erforderlich sind.

Das bedeutet eine Steigerung der Zuhaltekraft, mit welcher das Querschnittsverstellglied in Richtung seiner Geschlossenstellung gedrängt wird, um einen Faktor von etwa 2 bis 3 gegenüber pneumatischen Verstelleinrichtungen. Durch diesen Kraftüberschuss können kleine Abhebebewegungen des Querschnittsverstellglieds beziehungsweise einer Wastegateklappe des Wastegates infolge von Abgasdruckpulsen vermieden werden. Infolgedessen steht in einem unteren Drehzahlbereich der Brennkraftmaschine, welcher der Abgasturbolader zugeordnet ist, ein signifikant erhöhte Enthalpiebetrag vor einer Abgasturbine des Abgasturboladers zur Verfügung. Dieser führt zu einer Erhöhung des Ladedruckes, welcher mittels des Abgasturboladers erzielbar ist. Diese Erhöhung lässt sich in ein erhöhtes Drehmoment der Brennkraftmaschine umsetzen (low-end-torque).

Neben den größeren Stellkräften können mit elektrischen Stelleinrichtungen zudem kürzere Stellzeiten erreicht werden. Ist die Stelleinrichtung dem Abgasturbolader zugeordnet, so kann auf diese Weise das Ansprechverhalten des Abgasturboladers insbesondere bei dynamischen Lastwechseln verbessert werden. Pneumatische Verstelleinrichtungen weisen zudem den Nachteil auf, dass sie nicht jederzeit betätigt werden können, weil der erforderliche Stelldruck nicht immer vorhanden ist beziehungsweise erst mittels einer geeigneten Einrichtung, beispielsweise eine Pumpe, erzeugt werden muss. Ein weiterer Vorteil von elektrischen Verstelleinrichtungen gegenüber pneumatischen Verstelleinrichtungen ergibt sich dadurch, dass in Teillastbereichen der Brennkraftmaschine, in welchen keine Aufladung mittels des Abgasturboladers erforderlich ist, das Wastegate vollständig geöffnet werden kann. Dadurch lässt sich der Abgasgegendruck minimieren, was wiederum durch eine Verringerung der Ausschiebearbeit zu einem Verbrauchsvorteil der Brennkraftmaschine führt.

Eine hohe Zuhaltekraft und eine hohe Dynamik lässt sich beispielsweise mit einem Steller gemäß der DE 10 2005 028 372 A1 oder einer Getriebeeinrichtung für eine Verstelleinrichtung gemäß der DE 10 2010 000 688.2 erreichen.

Die Verstelleinrichtung kann alternativ zu dem vorstehend beschriebenen Einsatzbereich auch einem Stellorgan zur Luft- oder Abgasführung zugeordnet sein, oder verwendet werden, um eine Brennkraftmaschine kontinuierlich zu steuern und/oder zu regeln. Denkbar ist auch, dass die Verstelleinrichtung zum Zwei-Punkt-Schalten eingesetzt wird. Ein weiteres Einsatzgebiet für die Verstelleinrichtung ist eine Nieder- oder Hochdruck-Abgasrückführung oder der Bypass eines Abgasrückführungskühlers.

Häufig muss die Verstelleinrichtung in eine erste Verstellrichtung eine größere Stellkraft beziehungsweise ein größeres Drehmoment bewirken als in eine der ersten Verstellrichtung entgegengesetzte zweite Verstellrichtung. Insbesondere wenn die Verstelleinrichtung dem Querschnittsverstellglied zugeordnet ist, muss sie dazu ausgelegt sein, während eines Schließvorgangs des Querschnittsverstellglieds größere Stellkräfte bereitzustellen als während eines Öffnungsvorgangs. Dies rührt daher, dass bei entsprechender Auslegung des Querschnittsverstellglieds durch dieses hindurchströmendes Fluid beziehungsweise die von diesem verursachten Fluidkräfte dem Schließvorgang entgegenwirkt, während der Öffnungsvorgang durch die Fluidkräfte unterstützt wird. Damit muss die Verstelleinrichtung beziehungsweise der Antrieb der Verstelleinrichtung derart ausgelegt werden, dass jederzeit die während des Schließvorgangs benötigte Kraft beziehungsweise das benötigte Drehmoment erzeugbar ist. Somit muss der (elektrische) Antrieb und eventuell dessen Ansteuerung (Leistungsendstufe) hochskaliert werden. Dies bedeutet jedoch einen Anstieg der Baugröße und auch der elektrischen Leistungsaufnahme der Verstelleinrichtung.

### Offenbarung der Erfindung

Demgegenüber weist die Verstelleinrichtung mit den in Anspruch 1 genannten Merkmalen den Vorteil auf, dass die Baugröße und/oder die Leistungsaufnahme des Antriebs reduziert werden können. Dies wird erfindungsgemäß durch eine drehfest mit der Antriebswelle verbundene Kurvenscheibe erreicht, deren zumindest bereichsweise von einer kreisrunden Form abweichender Rand an zumindest einer Umfangsposition mit einer von der Drehwinkelstellung der Kurvenscheibe abhängigen Kraft zur Erzeugung eines ein Antriebsmoment des Antriebs unterstützenden Zusatzdrehmoments auf der Antriebswelle beaufschlagt ist, wobei das Antriebsdrehmoment und das Zusatzdrehmoment gemeinsam das Gesamtdrehmoment bilden. Dabei kann die Kurvenscheibe beispielsweise unmittelbar an beziehungsweise auf der Antriebswelle befestigt sein beziehungsweise von dieser ausgebildet werden. Alternativ kann es jedoch auch vorgesehen sein, dass die Kurvenscheibe lediglich mit der Antriebswelle wirkverbunden ist, wobei zwischen dem Antrieb, welcher beispielsweise ein Elektromotor sein kann, und der Antriebswelle oder alternativ der Antriebswelle und der Kurvenscheibe ein Getriebe vorgesehen sein kann. Von Bedeutung ist insoweit lediglich, dass das mittels der Kurvenscheibe erzeugte Zusatzdrehmoment auf die Antriebswelle wirkt und somit über diese weiteren Bereichen der Verstelleinrichtung, insbesondere einer Abtriebswelle, zur Verfügung gestellt wird. Auf die Antriebswelle wirkt dabei das Gesamtdrehmoment, welches von dem Antriebsdrehmoment, welches mittels des Antriebs bereitstellbar ist, und dem Zusatzdrehmoment gebildet wird. Das Gesamtdrehmoment muss während eines Stellvorgangs der Verstelleinrichtung stets ungleich Null sein.

Der Antrieb der Verstelleinrichtung bewirkt also das Antriebsdrehmoment. Das mittels der Kurvenscheibe erzeugt Zusatzdrehmoment ist dabei in zumindest einer Drehrichtung des Antriebs und bei zumindest einer Drehwinkelstellung dem Antriebsdrehmoment gleichgerichtet und unterstützt das Antriebsdrehmoment demnach. Bei dem Vorliegen dieser mindestens einen Drehrichtung des Antriebs ist also in zumindest einer Drehwinkelstellung beziehungsweise zumindest einem Drehwinkelstellungsbereich ein größeres Gesamtdrehmoment bewirkbar, als mit dem Antrieb nominal oder maximal erzeugbar ist. Die Kurvenscheibe weist dabei den - im Querschnitt gesehen - zumindest bereichsweise von der kreisrunden Form abweichenden Rand auf. Sie wird zur Erzeugung der Kraft, welche das Zusatzdrehmoment bewirkt, an zumindest einer Umfangsposition mit der Kraft beaufschlagt. Die Kraft ist dabei von der Drehwinkelstellung der Kurvenscheibe abhängig. Vorzugsweise ist die Kraft in zumindest zwei Drehwinkelstellungen der Kurvenscheibe unterschiedlich groß. Es kann jedoch auch vorgesehen sein, dass die Kraft für jede Drehwinkelstellung der Kurvenscheibe gleich ist.

Von der Verstelleinrichtung wird eine Stellkraft erzeugt, welche beispielsweise zum Verstellen des Querschnittsverstellglieds dient. Die Stellkraft wird insoweit in Form des Gesamtdrehmoments von der Antriebswelle übertragen. Die Stellkraft wird jedoch nicht über die Kurvenscheibe übertragen; diese dient vielmehr lediglich dazu, das Zusatzdrehmoment zu erzeugen, welches zusammen mit dem Antriebsdrehmoment das Gesamtdrehmoment - und somit die Stellkraft - abbildet.

Eine Weiterbildung der Erfindung sieht vor, dass die Kraft eine Federkraft ist. Besonders einfach kann die Kraft demnach mittels einer Feder, beispielsweise einer Spiralfeder, erzeugt werden. Die Kraft beziehungsweise Federkraft ist dabei in Richtung der Kurvenscheibe gerichtet. Wenn die Kraft mittels der Feder erzeugt wird, ist sie üblicherweise von dem momentanen Hub der Feder abhängig. Je stärker die Feder komprimiert wird, umso größer wird insofern die Kraft beziehungsweise Federkraft.

Eine Weiterbildung der Erfindung sieht vor, dass die Kurvenscheibe mittels eines mit dem Rand der Kurvenscheibe in Gleit- und/oder Rollverbindung stehenden Läufers mit der Kraft beaufschlagt ist. Der Läufer sitzt demnach in zumindest einer Drehwinkelstellung der Kurvenscheibe derart auf ihrem Rand auf, dass die Gleit- beziehungsweise Rollverbindung vorliegt. Durch diese Gleit- beziehungsweise Rollverbindung wird die Kurvenscheibe von dem Läufer mit der Kraft beaufschlagt. Der Läufer steht dabei zum Beispiel, insbesondere über ein Zwischnteil, zum Beispiel eine Schubstange, mit der Feder in Wirkverbindung beziehungsweise ist an dieser befestigt. Der Läufer ist beispielsweise als drehbar gelagerte Rolle ausgebildet, welche mittels der von der Feder bewirkten Federkraft in Richtung der Kurvenscheibe gedrängt wird.

Eine Weiterbildung der Erfindung sieht vor, dass die Antriebswelle über eine Drehmomentübertragungseinrichtung mit einer Abtriebswelle der Verstelleinrichtung wirkverbunden ist. Über die Abtriebswelle stellt die Verstelleinrichtung die Stellkraft beziehungsweise ein entsprechendes Drehmoment abtriebsseitig zur Verfügung. Der Antrieb der Verstelleinrichtung erzeugt dabei das Antriebsdrehmoment und die Kurvenscheibe das Zusatzdrehmoment. Gemeinsam bilden das Antriebsdrehmoment und das Zusatzdrehmoment das Gesamtdrehmoment. Das Gesamtdrehmoment liegt dabei an der Antriebswelle an und wird von dieser auf die Abtriebswelle übertragen. Zu diesem Zweck ist die Drehmomentübertragungseinrichtung vorgesehen.

Eine Weiterbildung der Erfindung sieht vor, dass die Abtriebswelle mit einer Schließeinrichtung des Querschnittsverstellglieds verbunden und/oder wirkverbunden ist. Die Schließeinrichtung ist beispielsweise ein Dichtelement, welches in einer Geschlossenstellung mit einem Ventilsitz des Querschnittsverstellglieds zusammenwirkt, um einen Fluidstrom durch das Querschnittsverstellglied zu unterbinden. In der Offenstellung liegt dagegen das Dichtelement beabstandet zu dem Ventilsitz vor, so dass das Fluid das Querschnittsverstellglied durchströmen kann. Selbstverständlich ist das Querschnittsverstellglied mittels der Verstelleinrichtung auch in jede beliebige Position zwischen der Geschlossenstellung und der Offenstellung bringbar. Um die beschriebene Verlagerung des Dichtelements durchzuführen, ist die Abtriebswelle mit der Schließeinrichtung verbunden beziehungsweise wirkverbunden. Das bedeutet, dass die Schließeinrichtung beziehungsweise das Dichtelement an der Abtriebswelle befestigt sind oder zumindest die über die Abtriebswelle zur Verfügung gestellte Stellkraft auf die Schließeinrichtung wirken kann.

Eine Weiterbildung der Erfindung sieht vor, dass die Drehmomentübertragungseinrichtung als Viergelenk-Koppelgetriebe vorliegt, welches über eine mit der Antriebswelle wirkverbundene Antriebsschwinge, eine mit der Abtriebswelle wirkverbundene Abtriebsschwinge und eine die Antriebsschwinge und die Abtriebsschwinge wirkverbindende Koppel verfügt. Die Verstelleinrichtung ist demnach als Drehsteller ausgebildet. Die Kraftübertragung erfolgt dabei über das Viergelenk-Koppelgetriebe beziehungsweise über einen Viergelenktrieb. Das Viergelenk-Koppelgetriebe verfügt über die Antriebsschwinge, die Abtriebsschwinge und die Koppel, welche die Antriebsschwinge mit der Abtriebsschwinge wirkverbindet. Die Antriebsschwinge kann unmittelbar - also über die Antriebswelle - oder über ein Getriebe mit dem Antrieb wirkverbunden sein. Das Getriebe weist dabei das Antriebsrad und das Abtriebsrad auf, welche miteinander zur Übertragung eines Drehmoments von dem Antrieb auf die Antriebsschwinge zusammenwirken. Das Antriebsrad ist dem Antrieb und das Abtriebsrad der Antriebsschwinge beziehungsweise der Antriebswelle zugeordnet. Das Viergelenk-Koppelgetriebe ist üblicherweise derart ausgelegt, dass sich die Antriebsschwinge in der Geschlossenstellung des Querschnittsverstellglieds im Bereich einer Strecklage befindet.

Um Verschleiß und Drift-Erscheinungen in einem Dauerbetrieb des Viergelenk-Koppelgetriebes, der Verstelleinrichtung und/oder des Querschnittsverstellglieds ausgleichen zu können, kann jedoch auch eine Beabstandung der Antriebsschwinge von der Strecklage in der Geschlossenstellung des Querschnittsverstellglieds vorgesehen sein. Unter Strecklage ist dabei die Stellung der Antriebsschwinge zu verstehen, bei welcher eine gedachte Gerade zwischen einer Antriebslagerstelle (in welcher die Antriebsschwinge mit dem Antrieb wirkverbunden ist) und einer Verbindungsstelle zwischen der Antriebsschwinge und der Koppel mit der Koppel beziehungsweise einer gedachten Geraden zwischen den Verbindungspunkten der Koppel mit Antriebsschwinge und Abtriebsschwinge im Wesentlichen fluchtet, also quasi eine Verlängerung für diese darstellt. Der Drehwinkelstellungsbereich, in welchem die Antriebsschwinge in der Geschlossenstellung des Querschnittsverstellglieds vorliegt, kann auch als Verschleißbereich bezeichnet werden, da dieser, wie vorstehend beschrieben, zum Ausgleich von Verschleiß beziehungsweise Drift-Erscheinungen vorgehalten wird. Über das Viergelenk-Koppelgetriebe wird das Gesamtdrehmoment von der Antriebswelle auf die Abtriebswelle übertragen.

Eine Weiterbildung der Erfindung sieht ein Getriebe vor, über welches die Antriebswelle mit dem Antrieb wirkverbunden ist. Das Getriebe kann dabei ein nichtlineares Getriebe sein, also eine in Abhängigkeit von der Drehwinkelstellung der Antriebswelle vorliegende, veränderliche Übersetzung aufweisen. Das Getriebe weist dabei ein Antriebsrad und ein Abtriebsrad auf, wobei das Antriebsrad dem Antrieb und das Abtriebsrad der Antriebswelle zugeordnet ist. Besonders vorteilhaft ist es dabei, wenn das Antriebsrad einen sich über den Umfang ändernden Wälzkurvenradius und das Abtriebsrad einen zu diesem komplementär verlaufenden Wälzkurvenradius aufweisen, wobei die Wälzkurvenradien in einem Drehwinkelbereich um die Strecklage des Viergelenk-Koppelgetriebes zur Ausbildung einer ersten Übersetzung des Getriebes und außerhalb des Winkelbereichs zur Ausbildung mindestens einer zweiten, zur ersten Übersetzung größeren Übersetzung gewählt sind. Unter einer größeren Übersetzung wird dabei verstanden, dass das Verhältnis von an dem Abtriebsrad anliegendem Drehmoment zu an dem Antriebsrad anliegendem Drehmoment größer ist.

Das Getriebe weist somit einen über die Drehwinkelstellung des Antriebsrads beziehungsweise des Abtriebsrads veränderliche Übersetzung auf. Der Wälzkurvenradius des Antriebsrads und der Wälzkurvenradius des Abtriebsrads sind derart aufeinander abgestimmt, dass Antriebsrad und Abtriebsrad in jeder Drehwinkelstellung zum Übertragen des Drehmoments von Antrieb auf Antriebsschwinge zusammenwirken. Sind Antriebsrad und Abtriebsrad als Zahnräder ausgebildet, so sind die Wälzkurvenradien derart zu wählen, dass die Zahnräder in jeder Drehwinkelstellung miteinander in Eingriff stehen. Durch entsprechende Wahl der Wälzkurvenradien ist die Übersetzung in dem Drehwinkelbereich um die Strecklage des Viergelenk-Koppelgetriebe kleiner als außerhalb des Winkelbereichs. Somit wird erreicht, dass trotz gleich bleibendem Drehmoment des Antriebs die auf die Koppel aufgeprägte Stellkraft eine maximal zulässige Stellkraft nicht überschreitet. Auf diese Weise werden Beschädigungen der Getriebeanordnung, der Verstelleinrichtung und/oder des Abgasturboladers vermieden. Die erste Übersetzung muss jedoch nicht über den gesamten Drehwinkelbereich vorliegen. Vielmehr kann sie lediglich in einem Teilbereich des Drehwinkelbereichs vorgesehen sein beziehungsweise einer bestimmten Drehwinkelstellung zugeordnet sein. Vorteilhafterweise ist die erste Übersetzung die kleinste Übersetzung, welche zwischen dem Antriebsrad und dem Abtriebsrad vorliegt. Weitere Übersetzungen in dem Drehwinkelbereich und außerhalb des Drehwinkelbereichs sind also größer als die erste Übersetzung.

Vorzugsweise ist eine stetige Veränderung der Übersetzung über die Drehwinkelstellung vorgesehen. Das bedeutet, dass die erste Übersetzung in der Drehwinkelstellung des Antriebsrads vorliegt, in welcher sich das Viergelenk-Koppelgetriebe in seiner Strecklage befindet. Ausgehend von der ersten Übersetzung steigt die Übersetzung des Getriebes stetig an, wobei beispielsweise ein linearer Anstieg oder ein einer beliebigen anderen Gesetzmäßigkeit folgender Anstieg vorgesehen sein kann. Aus der vorstehend beschriebenen Ausführung der Verstelleinrichtung ergibt sich der Vorteil, dass die Stellzeit reduziert werden kann, weil die mittlere Übersetzung des Getriebes sinkt. Das bedeutet, dass der Antrieb eine geringe Anzahl an Umdrehungen beschreiben muss, um dieselbe Stellwirkung wie bei aus dem Stand der Technik bekannten Verstelleinrichtung zu erreichen, also beispielsweise das Querschnittsverstellglied des Abgasturboladers von seiner Offenstellung in seine Geschlossenstellung zu verlagern. Ebenso wird, wie bereits vorstehend beschrieben, die zu verstellende Einrichtung vor unzulässig hohen Stellkräften geschützt.

Eine Weiterbildung der Erfindung sieht vor, dass der Rand in mindestens einem ersten Bereich eine kreisrunde Form und in mindestens einem zweiten Bereich eine von der kreisrunden Form abweichende Form aufweist, wobei der zweite Bereich der Kurvenscheibe derart angeordnet ist, dass er in einem Drehwinkelstellungsbereich mit der Kraft beaufschlagt ist, in welchem das Querschnittsverstellglied geschlossen oder nahezu geschlossen ist. Wie bereits vorstehend beschrieben, muss die Verstelleinrichtung, wenn sie dem Querschnittsverstellglied zugeordnet ist, häufig in demjenigen Drehwinkelstellungsbereich die größte Kraft beziehungsweise das größte Drehmoment bereitstellen, in welchem das Querschnittverstellglied in seiner Geschlossenstellung oder nahe seiner Geschlossenstellung vorliegt. In dem ersten Bereich weist der Rand der Kurvenscheibe die kreisrunde Form auf. Das bedeutet, dass die auf die Kurvenscheibe wirkende Kraft kein Zusatzdrehmoment bewirkt. Erst wenn die Kraft in dem zweiten Bereich angreift, die Umfangsposition, an welcher die Kraft angreift, also in dem zweiten Bereich liegt, kann sie ein Zusatzdrehmoment bewirken, welches von null wesentlich verschieden ist. Um den Schließvorgang des Querschnittsverstellglieds zu unterstützen, soll dabei der zweite Bereich derart an der Kurvenscheibe vorliegen, dass die Beaufschlagung mit der Kraft in einem Drehwinkelstellungsbereich (bezogen auf die Kurvenscheibe und/oder die Antriebswelle) vorliegt, in welchem das Querschnittsverstellglied geschlossen beziehungsweise nahezu geschlossen ist.

Eine Weiterbildung der Erfindung sieht vor, dass die Kraft auf die Drehachse der Kurvenscheibe gerichtet ist und/oder eine von der Kraft bewirkte Normalkraft auf den Rand der Kurvenscheibe, insbesondere bei Beaufschlagung der Kurvenscheibe in dem zweiten Bereich, nicht auf die Drehachse gerichtet ist. Besonders vorteilhaft ist es, wenn die Kraft auf die Drehachse der Kurvenscheibe gerichtet ist. Auf diese Weise wird, zumindest bei Beaufschlagung mit der Kraft in dem ersten Bereich, verhindert, dass - abgesehen von Reibungskräften zwischen dem Läufer und der Kurvenscheibe - Kräfte in Umfangsrichtung der Kurvenscheibe vorliegen, welche das Zusatzdrehmoment bewirken. Um das Zusatzdrehmoment zu bewirken, soll die von der Kraft bewirkte Normalkraft auf den Rand der Kurvenscheibe, also die Kraft, welche senkrecht zu einer Oberfläche des Rand der Kurvenscheibe wirkt, nicht auf die Drehachse gerichtet sein. Dieses ist selbstredend insbesondere dann der Fall, wenn die Kurvenscheibe in dem zweiten Bereich mit der Kraft beaufschlagt ist. Auf diese Weise wird bei Beaufschlagung der Kurvenscheibe in dem zweiten Bereich mit der Kraft das Zusatzdrehmoment erzeugt.

Die Erfindung betrifft weiterhin einen Abgasturbolader mit einem als Querschnittsverstellglied ausgebildeten Wastegate und einer Verstelleinrichtung zum Verstellen des Querschnittsverstellglieds, insbesondere gemäß den vorstehenden Ausführungen, wobei die Verstelleinrichtung zur Bereitstellung eines Gesamtdrehmoments an einer an einen Antrieb gekoppelten Antriebswelle der Verstelleinrichtung vorgesehen ist. Dabei ist eine drehfest mit der Antriebswelle verbundene Kurvenscheibe vorgesehen, deren zumindest bereichsweise von einer kreisrunden Form abweichender Rand an zumindest einer Umfangsposition mit einer von der Drehwinkelstellung der Kurvenscheibe abhängigen Kraft zur Erzeugung eines ein Antriebsmoment des Antriebs unterstützenden Zusatzdrehmoments auf der Antriebswelle beaufschlagt ist, wobei das Antriebsdrehmoment und das Zusatzdrehmoment gemeinsam das Gesamtdrehmoment bilden. Der Antrieb der Verstelleinrichtung kann gemäß den vorstehenden Ausführungen einen geringeren Bauraum in Anspruch nehmen beziehungsweise einen geringeren Leistungsbedarf aufweisen als Antriebe für aus dem Stand der Technik bekannte Verstelleinrichtungen. Insofern ist das Verstellen des Wastegates beziehungsweise des Querschnittverstellglieds mit einem geringeren Energieaufwand möglich. Die Verstelleinrichtung des Abgasturboladers kann gemäß den vorstehenden Ausführungen weitergebildet sein.

Die Erfindung wird im Folgenden anhand der in der Zeichnung dargestellten Ausführungsbeispiele näher erläutert, ohne dass eine Beschränkung der Erfindung erfolgt. Es zeigen:
Figur 1 eine schematische Darstellung einer Verstelleinrichtung für ein Querschnittsverstellglied mit einem Viergelenk-Koppelgetriebe, wobei sich eine Antriebsschwinge in einer Strecklage befindet,
Figur 2 eine drehfest mit einer Antriebswelle der Verstelleinrichtung verbundene Kurvenscheibe, mittels welcher ein Zusatzdrehmoment auf der Antriebswelle erzeugbar ist, und
Figur 3 ein Diagramm, in welchem das zum Schließen des Querschnittsverstellglieds notwendige Drehmoment sowie das mittels eines Antriebs der Verstelleinrichtung erzeugbare Antriebsdrehmoment über einen Stellwinkel der Verstelleinrichtung aufgetragen sind.

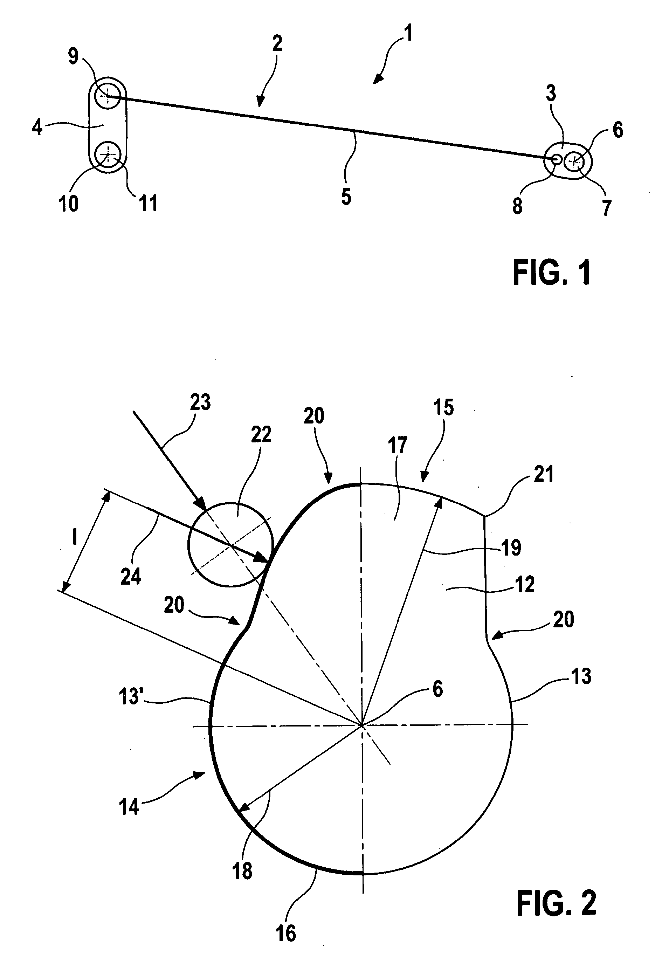

Die Figur 1 zeigt eine schematische Ansicht einer Verstelleinrichtung 1 mit einem Viergelenk-Koppelgetriebe 2. Ein solches Viergelenk-Koppelgetriebe 2 wird beispielsweise zum Verstellen eines Querschnittsverstellglieds, beispielsweise eines Wastegates eines Abgasturboladers, verwendet. Die Verstelleinrichtung 1 ist dabei eine elektrisch betätigte Verstelleinrichtung, verfügt also über einen elektrischen Steller beziehungsweise elektrischen Antrieb, beispielsweise einen Elektromotor. Das Viergelenk-Koppelgetriebe 2 weist eine Antriebsschwinge 3, eine Abtriebsschwinge 4 und eine die Antriebsschwinge 3 und die Abtriebsschwinge 4 wirkverbindende Koppel 5 auf. Die Antriebsschwinge 3 ist dabei um eine Lagerstelle 6 drehbar gelagert. Sie ist an einer Antriebswelle 7 drehfest angeordnet beziehungsweise mit dieser verbunden. An der Lagerstelle 6 ist sie mit einem hier nicht dargestellten Getriebe wirkverbunden. Die Koppel 5 ist an einer Koppellagerstelle 8 drehbar an der Antriebsschwinge 2 gelagert. An der Antriebsschwinge 4 ist eine weitere Koppellagerstelle 9 vorgesehen, in welcher die Koppel 5 an der Abtriebsschwinge 4 drehbar gelagert ist. Die Abtriebsschwinge 4 ist um eine Antriebslagerstelle 10 drehbar gelagert und dazu vorzugsweise auf einer Abtriebswelle 11 befestigt. Über die Abtriebswelle 11 ist eine Wirkverbindung zwischen der Abtriebsschwinge 4 und dem Querschnittsverstellglied des Abgasturboladers hergestellt. Die Verstelleinrichtung 1 beziehungsweise das Viergelenk-Koppelgetriebe 2, welches hier dargestellt ist, ist also Bestandteil des Abgasturboladers.

Die Antriebsschwinge 3 ist in der Figur 1 in einer Drehwinkelstellung dargestellt, in welcher das Viergelenk-Koppelgetriebe 2 in seiner Strecklage vorliegt. In dieser bildet eine gedachte Gerade zwischen der Lagerstelle 6 und der Koppellagerstelle 8 im Wesentlichen eine Verlängerung einer gedachten Geraden zwischen den Koppellagerstellen 8 und 9. Die Abtriebsschwinge 4 liegt dabei in einer Drehwinkelstellung vor, in welcher sich das Querschnittsverstellglied beziehungsweise das Wastegate des Abgasturboladers in seiner Geschlossenstellung befindet. Die dargestellte Drehwinkelstellung der Abtriebsschwinge 4 kann daher ebenfalls als Geschlossenstellung bezeichnet werden. Soll die Abtriebsschwinge 4 in dieser Drehwinkelstellung gehalten werden, so ist die dargestellte Strecklage der Antriebsschwinge 3 besonders vorteilhaft, da in dieser das von dem Antrieb aufzubringende Drehmoment sehr klein oder gleich null ist. Es ist also mit einem sehr geringen Energieaufwand möglich, die Abtriebsschwinge 4 in der Geschlossenstellung zu halten. Die in der Figur 1 dargestellte Stellung des Viergelenk-Koppelgetriebes 2 in seiner Strecklage wird zweckmäßigerweise nur bei Erreichen des maximalen Verschleißes und/oder eines maximalen Temperatur-Drifts erreicht beziehungsweise eingestellt. Vorzugsweise ist das Viergelenk-Koppelgetriebe 2 derart ausgebildet, dass in der Geschlossenstellung der Abtriebsschwinge 4 die Strecklage (noch) nicht erreicht ist, so dass ein Reserve-Drehwinkelbereich zum Nachstellen beziehungsweise zum Kompensieren von Verschleiß, Toleranzen und/oder Temperatur-Drift zur Verfügung steht.

Während des Schließvorgangs des dem Abgasturboladers zugeordneten Querschnittsverstellglieds treten üblicherweise größere Kräfte auf beziehungsweise werden größere Stellkräfte benötigt als während eines Öffnungsvorgangs. Dies liegt darin begründet, dass das Querschnittsverstellglied durchströmendes Fluid eine Fluidkraft auf ein Dichtelement einer hier nicht dargestellten Schließeinrichtung des Querschnittsverstellglieds bewirkt. Insofern muss der Antrieb der Verstelleinrichtung 1 dazu ausgelegt sein, während des Schließvorgangs benötigte Kräfte zuverlässig zu erzeugen. Während des Öffnungsvorgangs wird jedoch nur ein geringer Teil der mit dem Antrieb erzeugbaren Antriebsleistung tatsächlich benötigt. Bei aus dem Stand der Technik bekannten Filtereinrichtungen ist deswegen der Antrieb vergleichsweise groß dimensioniert, so dass er einen großen Bauraumbedarf und gleichzeitig eine hohe Energieaufnahme aufweist.

Aus diesem Grund ist die in der Figur 2 dargestellte Kurvenscheibe 12 drehfest mit der Antriebswelle 7 verbunden. Alternativ kann die Kurvenscheibe 12 auch der Abtriebswelle 11 zugeordnet sein. Die Kurvenscheibe 12 weist einen Rand 13 auf (hier als Kontur der Kurvenscheibe 12 dargestellt), welcher in einem ersten Bereich 14 eine kreisrunde Form und in einem zweiten Bereich 15 eine von der kreisrunden Form abweichende Form aufweist. Die Kurvenscheibe 12 weist also zumindest einen über einen Umfang 16 der Kurvenscheibe 12 hinaus ragenden Nocken 17 auf. In dem ersten Bereich 14 weist die Kurvenscheibe 12 einen durch den Pfeil 18 gekennzeichneten Radius auf. In dem zweiten Bereich 15 liegt beispielsweise der maximale Radius der Kurvenscheibe 12, welcher durch den Pfeil 19 gekennzeichnet ist, vor. Der Übergang zwischen dem ersten Bereich 14 und dem zweiten Bereich 15 kann stetig ausgebildet sein, also mittels Radien 20 verlaufen. Alternativ oder zusätzlich kann auf den Rand 13 zumindest eine Unstetigkeit 21 vorliegen.

Die Kurvenscheibe 12 wird mittels eines Läufers 22, welcher mit dem Rand 13 der Kurvenscheibe 12 in Gleit- und/oder Rollverbindung steht, mit einer Kraft beaufschlagt, welche in zumindest einer Drehrichtung des Antriebs beziehungsweise der Antriebswelle 7 und in zumindest einer Drehwinkelstellung der Kurvenscheibe ein Zusatzdrehmoment auf der Antriebswelle 7 bewirkt. Die Kraft, mit welcher die Kurvenscheibe 12 beaufschlagt wird, ist dabei abhängig von der Drehwinkelstellung der Kurvenscheibe 12. Das bedeutet jedoch nicht, dass für unterschiedliche Drehwinkelstellungen unterschiedliche Kräfte vorliegen müssen.

Dies kann jedoch der Fall sein. Der Läufer 22 ist beispielsweise als drehbar gelagerte Rolle ausgebildet, welche auf dem Rand 13 der Kurvenscheibe 12 abrollt.

Der Läufer 22 wird von einer hier nicht dargestellten Feder in Richtung der Kurvenscheibe 12 gedrängt. Dabei ist vorzugsweise vorgesehen, dass der Läufer 22 stets, also in jeder Drehwinkelstellung der Kurvenscheibe 12, mit deren Rand 13 in Berührkontakt steht. Die von der Feder bewirkte Kraft ist entsprechend des Pfeils 23 in Richtung der Lagerstelle 6 gerichtet. Greift die Kraft somit in dem ersten Bereich 14 an, so bewirkt sie keine Kraft in Umfangsrichtung der Kurvenscheibe 12, so dass keine oder lediglich ein geringes Zusatzdrehmoment erzeugt wird. Greift die Kraft dagegen, wie in der Figur 2 dargestellt, in dem zweiten Bereich 15 an der Kurvenscheibe 12 an, so bewirkt sie eine durch den Pfeil 24 gekennzeichnet Normalkraft, also eine Kraft, welche auf der Oberfläche beziehungsweise dem Rand 13 der Kurvenscheibe 12 senkrecht steht, die nicht in Richtung der Lagerstelle 6 gerichtet ist. Eine in Richtung der Normalkraft verlaufende Gerade ist dabei windschief zu einer durch die Lagerstelle verlaufenden Geraden. Bedingt dadurch liegt ein Abstand I zwischen der Lagerstelle 6 und der Normalkraft (Pfeil 24) vor, so dass das Zusatzdrehmoment um die Lagerstelle 6 erzeugt wird und damit an der Antriebswelle 7, an welcher die Kurvenscheibe 12 drehfest befestigt ist, angreift.

Auf zumindest einem Bereich des Rands 13 liegt eine Lauffläche 13' vor, welche in der Figur 2 mit einer größeren Strichstärke gekennzeichnet ist. Der Läufer 22 steht in jeder Drehwinkelstellung der Kurvenscheibe 12 mit der Lauffläche 13' in Berührkontakt, liegt also an dieser an beziehungsweise auf ihr auf. Der Drehwinkelbereich, in welchem die Kurvenscheibe 12 verdrehbar ist, ist demnach derart begrenzt, dass der Läufer 22 stets mit der Lauffläche 13' in Berührkontakt steht. Die Größe des Drehwinkelbereichs beträgt beispielsweise, wie in der Figur 2 dargestellt, 180°. Alternativ sind jedoch auch beliebige andere Größen, insbesondere kleinere, des Drehwinkelbereichs wählbar.

Durch entsprechende Gestaltung des Rands 13 kann zumindest eine Rastposition beziehungsweise Parkposition vorliegen. Befindet sich die Kurvenscheibe 12 in einer einer solchen Rastposition entsprechenden Drehwinkelstellung, so muss mittels des Antriebs ein bestimmtes Antriebsdrehmoment erzeugt werden, um die Kurvenscheibe 12 in eine andere Drehwinkelstellung zu bewegen. Entfällt das Antriebsmoment, wenn sich die Kurvenscheibe 12 in einer Drehwinkelstellung in einem Bereich um die Rastposition befindet, in welchem ein stetiger Verlauf des Rands 13 bis zu der Rastposition vorliegt und liegt in der Rastposition ein Zusatzdrehmoment von Null vor, so wird die Kurvenscheibe 12 in die Rastposition gedrängt. Aus der der Rastposition entsprechenden Drehwinkelstellung kann die Kurvenscheibe 12 lediglich durch das Aufbringen eines bestimmten Antriebsdrehmoments mittels des Antriebs herausbewegt werden.

Durch einen entsprechenden Verlauf des Rands 13 kann zusätzlich oder alternativ eine in Abhängigkeit von der Drehwinkelstellung der Kurvenscheibe 12 bei Wegfall des Antriebsdrehmoments anzufahrende Vorzugsstellung, beispielsweise die Geschlossenstellung oder die Offenstellung, vorliegen. Dabei bewirkt das Zusatzdrehmoment, dass die Vorzugsstellung bei Wegfall des Antriebsdrehmoments angefahren und gehalten wird. Prinzipiell entspricht die Vorzugsstellung der vorstehend beschriebenen Rastposition. Allerdings muss zum Vorliegen der Vorzugsstellung der Rand 13 derart ausgestaltet sein, dass das Zusatzdrehmoment aus jeder Drehwinkelposition ein Drehen der Kurvenscheibe 12 in Vorzugsstellung bewirkt. Üblicherweise liegt in der Vorzugsstellung demnach ein Zusatzdrehmoment von Null vor beziehungsweise ist ein Endanschlag vorgesehen, in dessen Richtung das Zusatzdrehmoment drängt.

Der Vorteil der vorstehend beschriebenen Kurvenscheibe 12 ist die mögliche Reduzierung des Bauraums und der Leistung des Antriebs sowie eine höhere Dynamik der Verstelleinrichtung 1 in Richtung der Geschlossenstellung des Querschnittsverstellglieds.

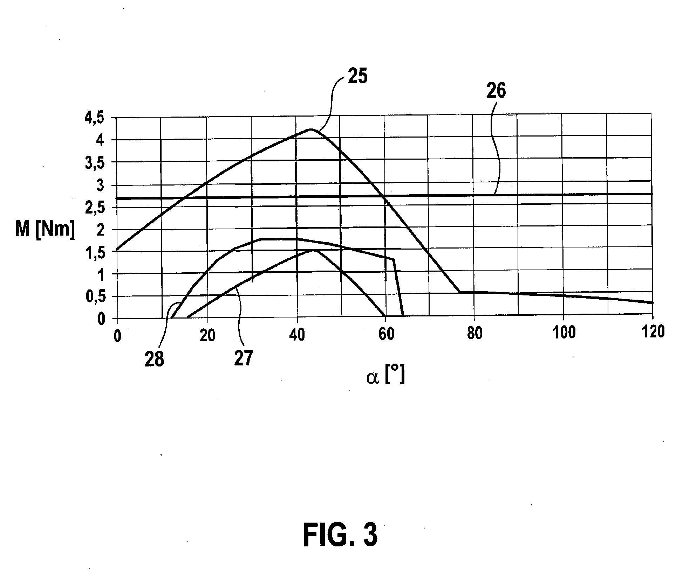

Die Figur 3 zeigt Verläufe mehrerer Drehmomente (in Nm) über die Drehwinkelstellung α der Antriebswelle 7. Dabei zeigt ein Verlauf 25 das während eines Schließvorgangs benötigte Drehmoment beziehungsweise Gesamtdrehmoment an der Antriebswelle 7. Ein Verlauf 26 zeigt das mittels des Antriebs erzeugbare Antriebsdrehmoment. Es wird deutlich, dass das während des Schließvorgangs erforderliche Gesamtdrehmoment in einem bestimmten Winkelbereich (hier dem Bereich von etwa 15° bis 60°) größer ist als das mittels des Antriebs erzeugbare Antriebsdrehmoment. Ein Verlauf 27 gibt das Differenzdrehmoment an, welches zwischen dem benötigten Gesamtdrehmoment und dem Antriebsdrehmoment vorliegt. Letztlich zeigt ein Verlauf 28 das mittels der Kurvenscheibe 12 erzeugbare Zusatzdrehmoment.

Es wird deutlich, dass das Zusatzdrehmoment in jedem Winkelbereich größer oder gleich ist als die Drehmomentdifferenz zwischen dem benötigten Gesamtdrehmoment und dem bereitgestellten Antriebsdrehmoment. Auf diese Weise wird auch mit einem Antrieb, welcher eigentlich nicht das zum Schließen des Querschnittsverstellglieds notwendige Antriebsdrehmoment erzeugt, ein zuverlässiges Betreiben der Verstelleinrichtung 1 beziehungsweise des Querschnittsverstellglieds und damit des Abgasturboladers möglich.

## Patentansprüche

1. Verstelleinrichtung (1) eines Querschnittsverstellglieds eines Abgasturboladers, zur Bereitstellung eines Gesamtdrehmoments an einer an einen Antrieb gekoppelten Antriebswelle (7) der Verstelleinrichtung (1), **gekennzeichnet durch** eine drehfest mit der Antriebswelle (7) verbundene Kurvenscheibe (12), deren zumindest bereichsweise von einer kreisrunden Form abweichender Rand (13) an zumindest einer Umfangsposition mit einer von der Drehwinkelstellung der Kurvenscheibe (12) abhängigen Kraft zur Erzeugung eines ein Antriebsmoment des Antriebs unterstützenden Zusatzdrehmoments auf der Antriebswelle (7) beaufschlagt ist, wobei das Antriebsdrehmoment und das Zusatzdrehmoment gemeinsam das Gesamtdrehmoment bilden.

2. Verstelleinrichtung nach Anspruch 1, **dadurch gekennzeichnet, dass** die Kraft eine Federkraft ist.

3. Verstelleinrichtung nach einem der vorhergehenden Ansprüche, **dadurch gekennzeichnet, dass** die Kurvenscheibe (12) mittels eines mit dem Rand (13) der Kurvenscheibe (12) in Gleit- und/oder Rollverbindung stehenden Läufers (23) mit der Kraft beaufschlagt ist.

4. Verstelleinrichtung nach einem der vorhergehenden Ansprüche, **dadurch gekennzeichnet, dass** die Antriebswelle (7) über eine Drehmomentübertragungseinrichtung mit einer Abtriebswelle (11) der Verstelleinrichtung (1) wirkverbunden ist.

5. Verstelleinrichtung nach einem der vorhergehenden Ansprüche, **dadurch gekennzeichnet, dass** die Abtriebswelle (11) mit einer Schließeinrichtung des Querschnittsverstellglieds verbunden und/oder wirkverbunden ist.

6. Verstelleinrichtung nach einem der vorhergehenden Ansprüche, **dadurch gekennzeichnet, dass** die Drehmomentübertragungseinrichtung als Viergelenk-Koppelgetriebe (2) vorliegt, welches über eine mit der Antriebswelle (7) wirkverbundene Antriebsschwinge (3), eine mit der Abtriebswelle (11) wirkverbundene Abtriebsschwinge (4) und eine die Antriebsschwinge (3) und die Abtriebsschwinge (4) wirkverbindende Koppel (5) verfügt.

7. Verstelleinrichtung nach einem der vorhergehenden Ansprüche, **gekennzeichnet durch** ein Getriebe, über welches die Antriebswelle (7) mit dem Antrieb wirkverbunden ist.

8. Verstelleinrichtung nach einem der vorhergehenden Ansprüche, **dadurch gekennzeichnet, dass** die Kraft auf die Drehachse (6) der Kurvenscheibe (12) gerichtet ist und/oder eine von der Kraft bewirkte Normalkraft auf den Rand (13) der Kurvenscheibe (12), insbesondere bei Beaufschlagung der Kurvenscheibe (12) in dem zweiten Bereich (15), nicht auf die Drehachse (6) gerichtet ist.

9. Verstelleinrichtung nach einem der vorhergehenden Ansprüche, **dadurch gekennzeichnet, dass** der Rand (13) in mindestens einem ersten Bereich (14) eine kreisrunde Form und in mindestens einem zweiten Bereich (15) eine von der kreisrunden Form abweichende Form aufweist, wobei der zweite Bereich (15) der Kurvenscheibe (12) derart angeordnet ist, dass er in einem Drehwinkelstellungsbereich mit der Kraft beaufschlagt ist, in welchem das Querschnittsverstellglied geschlossen oder nahezu geschlossen ist.

10. Abgasturbolader mit einem als Querschnittsverstellglied ausgebildeten Wastegate und einer Verstelleinrichtung (1) zum Verstellen des Querschnittsverstellglieds nach einem oder mehreren der vorhergehenden Ansprüche, wobei die Verstelleinrichtung (1) zur Bereitstellung eines Gesamtdrehmoments an einer an einen Antrieb gekoppelten Antriebswelle (7) der Verstelleinrichtung (1) vorgesehen ist, **gekennzeichnet durch** eine drehfest mit der Antriebswelle (7) verbundene Kurvenscheibe (12), deren zumindest bereichsweise von einer kreisrunden Form abweichender Rand (13) an zumindest einer Umfangsposition mit einer von der Drehwinkelstellung der Kurvenscheibe (12) abhängigen Kraft zur Erzeugung eines ein Antriebsmoment des Antriebs unterstützenden Zusatzdrehmoments auf der Antriebswelle (7) beaufschlagt ist, wobei das Antriebsdrehmoment und das Zusatzdrehmoment gemeinsam das Gesamtdrehmoment bilden.

## Claims

1. Adjustment device (1) of a cross-section adjustment element of an exhaust-gas turbocharger for providing an overall torque at a driving shaft (7) of the adjustment device (1), which driving shaft is coupled to a drive, **characterized by** a cam disc (12) which is connected rotationally conjointly to the driving shaft (7) and whose edge (13), which deviates at least in regions from a circular shape, is at at least one circumferential position acted on with a force, which is dependent on the rotational angle position of the cam disc (12), for generating an auxiliary torque on the driving shaft (7), which auxiliary torque assists a drive torque of the drive, wherein the drive torque and the additional torque together form the overall torque.

2. Adjustment device according to Claim 1, **characterized in that** the force is a spring force.

3. Adjustment device according to one of the preceding claims, **characterized in that** the cam disc (12) is acted on with the force by means of a runner (23) which is in sliding and/or rolling contact with the edge (13) of the cam disc (12).

4. Adjustment device according to one of the preceding claims, **characterized in that** the driving shaft (7) is operatively connected to an output shaft (11) of the adjustment device (1) via a torque transmission device.

5. Adjustment device according to one of the preceding claims, **characterized in that** the output shaft (11) is connected and/or operatively connected to a closing device of the cross-section adjustment element.

6. Adjustment device according to one of the preceding claims, **characterized in that** the torque transmission device is provided in the form of a four-joint coupling mechanism (2) which has a driving link (3) operatively connected to the driving shaft (7), an output link (4) operatively connected to the output shaft (11), and a coupler (5) that operatively connects the driving link (3) and the output link (4).

7. Adjustment device according to one of the preceding claims, **characterized by** a gear mechanism by which the driving shaft (7) is operatively connected to the drive.

8. Adjustment device according to one of the preceding claims, **characterized in that** the force is directed toward the axis of rotation (6) of the cam disc (12), and/or a normal force exerted, owing to the force, on the edge (13) of the cam disc (12) is not directed toward the axis of rotation (6) in particular when the cam disc (12) is acted on in the second region (15).

9. Adjustment device according to one of the preceding claims, **characterized in that** the edge (13), in at least one first region (14), has a circular shape, and in at least one second region (15), has a shape which deviates from the circular shape, wherein the second region (15) of the cam disc (12) is arranged so as to be acted on with the force in a rotational angle position range in which the cross-section adjustment element is closed or approximately closed.

10. Exhaust-gas turbocharger having a wastegate in the form of a cross-section adjustment element and having an adjustment device (1) for adjustment of the cross-section adjustment element according to one or more of the preceding claims, wherein the adjustment device (1) is intended for providing an overall torque at a driving shaft (7), which is coupled to a drive, of the adjustment device (1), **characterized by** a cam disc (12) which is connected rotationally conjointly to the driving shaft (7) and whose edge (13), which deviates at least in regions from a circular shape, is at at least one circumferential position acted on with a force, which is dependent on the rotational angle position of the cam disc (12), for generating an auxiliary torque on the driving shaft (7), which auxiliary torque assists a drive torque of the drive, wherein the drive torque and the additional torque together form the overall torque.

## Revendications

1. Dispositif de réglage (1) d'un organe de réglage de la section transversale d'un turbocompresseur à gaz d'échappement, pour fournir un couple total au niveau d'un arbre d'entraînement (7) du dispositif de réglage (1) accouplé à un entraînement, **caractérisé par** un disque de came (12) connecté de manière solidaire en rotation à l'arbre d'entraînement (7), dont le bord (13) s'écartant au moins en partie d'une forme ronde circulaire est sollicité au niveau d'au moins une position périphérique par une force dépendant de la position angulaire de rotation du disque de came (12) pour générer un couple supplémentaire supportant un couple d'entraînement de l'entraînement sur l'arbre d'entraînement (7), le couple d'entraînement et le couple supplémentaire formant ensemble le couple total.

2. Dispositif de réglage selon la revendication 1, **caractérisé en ce que** la force est une force de ressort.

3. Dispositif de réglage selon l'une quelconque des revendications précédentes, **caractérisé en ce que** le disque de came (12) est sollicité avec la force au moyen d'un rotor (23) en liaison de glissement et/ou de roulement avec le bord (13) du disque de came (12).

4. Dispositif de réglage selon l'une quelconque des revendications précédentes, **caractérisé en ce que** l'arbre d'entraînement (7) est connecté fonctionnellement par le biais d'un dispositif de transfert de couple à un arbre de sortie (11) du dispositif de réglage (1).

5. Dispositif de réglage selon l'une quelconque des revendications précédentes, **caractérisé en ce que** l'arbre de sortie (11) est connecté et/ou est connecté fonctionnellement à un dispositif de fermeture de l'organe de réglage de la section transversale.

6. Dispositif de réglage selon l'une quelconque des revendications précédentes, **caractérisé en ce que** le dispositif de transfert de couple se présente sous la forme d'une transmission par engrenage à quadrilatère articulé (2) qui dispose d'un bras oscillant d'entraînement (3) connecté fonctionnellement à l'arbre d'entraînement (7), d'un bras oscillant de sortie (4) connecté fonctionnellement à l'arbre de sortie (11) et d'une bielle (5) connectant fonctionnellement le bras oscillant d'entraînement (3) et le bras oscillant de sortie (4).

7. Dispositif de réglage selon l'une quelconque des revendications précédentes, **caractérisé par** une transmission par le biais de laquelle l'arbre d'entraînement (7) est connecté fonctionnellement à l'entraînement.

8. Dispositif de réglage selon l'une quelconque des revendications précédentes, **caractérisé en ce que** la force est orientée vers l'axe de rotation (6) du disque de came (12), et/ou une force normale, provoquée par la force, sur le bord (13) du disque de came (12), en particulier lors de la sollicitation du disque de came (12) dans la deuxième région (15), n'est pas orientée vers l'axe de rotation (6).

9. Dispositif de réglage selon l'une quelconque des revendications précédentes, **caractérisé en ce que** le bord (13), dans au moins une première région (14), présente une forme ronde circulaire et dans au moins une deuxième région (15), présente une forme s'écartant de la forme ronde circulaire, la deuxième région (15) du disque de came (12) étant disposée de telle sorte qu'elle soit sollicitée par la force dans une région de position d'angle de rotation dans laquelle l'organe de réglage de la section transversale est fermé ou est pratiquement fermé.

10. Turbocompresseur à gaz d'échappement comprenant un clapet limiteur de pression de suralimentation réalisé sous forme d'organe de réglage de la section transversale et un dispositif de réglage (1) pour le réglage de l'organe de réglage de la section transversale selon l'une quelconque ou plusieurs des revendications précédentes, dans lequel le dispositif de réglage (1) est prévu pour fournir un couple total au niveau d'un arbre d'entraînement (7) du dispositif de réglage (1) accouplé à un entraînement, **caractérisé par** un disque de came (12) connecté de manière solidaire en rotation à l'arbre d'entraînement (7), dont le bord (13) s'écartant au moins en partie d'une forme ronde circulaire est sollicité au niveau d'au moins une position périphérique par une force dépendant de la position angulaire de rotation du disque de came (12) pour générer un couple supplémentaire supportant un couple d'entraînement de l'entraînement sur l'arbre d'entraînement (7), le couple d'entraînement et le couple supplémentaire formant ensemble le couple total.
